(19) Europäisches Patentamt
European Patent Office
Office européen des brevets

(11) **EP 4 734 544 A2**

(12) **EUROPEAN PATENT APPLICATION**

(43) Date of publication:
29.04.2026 Bulletin 2026/18

(21) Application number: 25221347.5

(22) Date of filing: 14.04.2022

(51) International Patent Classification (IPC):
*H04Q 9/04* *(2006.01)*

(52) Cooperative Patent Classification (CPC):
H04J 3/0667; G06F 1/12; H04J 3/0638; H04Q 9/04;
Y02P 90/02

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 16.08.2021 CN 202110938524

(62) Document number(s) of the earlier application(s) in
accordance with Art. 76 EPC:
22857302.8 / 4 344 102

(71) Applicant: Shenzhen Yinwang Intelligent
Technologies Co., Ltd.
Shenzhen, Guangdong 518110 (CN)

(72) Inventors:
• LIANG, Qi
SHENZHEN, 518129 (CN)
• HAN, Lei
SHENZHEN, 518129 (CN)
• JIANG, Chaofeng
SHENZHEN, 518129 (CN)

(74) Representative: Körber, Martin Hans
Mitscherlich PartmbB
Karlstraße 7
80333 München (DE)

Remarks:
•This application was filed on 08.12.2025 as a
divisional application to the application mentioned
under INID code 62.
•Claims filed after the date of receipt of the divisional
application (Rule 68(4) EPC).

(54) **CLOCK SYNCHRONIZATION METHOD OF CONTROL SYSTEM AND CONTROL SYSTEM**

(57) This application provides a clock synchronization method of a control system and a control system. The control system includes a first controller and a second controller, the first controller includes a first clock unit and a second clock unit, and the second controller includes a third clock unit. A clock of the first clock unit is different from a clock of the third clock unit, and a clock of the second clock unit is the same as the clock of the third clock unit. The method includes: The first controller and the second controller add a timestamp to sensor data by using a first clock, where the first clock is the clock of the first clock unit or the clock of the third clock unit, to ensure clock consistency of the sensor data. This improves accuracy of subsequent service processing.

EP 4 734 544 A2

**Description**

This application claims priority to Chinese Patent Application No. 202110938524.5, filed with the China National Intellectual Property Administration on August 16, 2021 and entitled "CLOCK SYNCHRONIZATION METHOD OF CONTROL SYSTEM AND CONTROL SYSTEM", which is incorporated herein by reference in its entirety.

**TECHNICAL FIELD**

This application relates to the field of artificial intelligence technologies, and in particular, to a clock synchronization method of a control system and a control system.

**BACKGROUND**

In an autonomous driving field, a plurality of clock units are usually deployed in a control system of an intelligent vehicle, and are configured to provide clocks for data collected by sensors, for example, a UTC clock or a crystal oscillator clock. Timestamps of the data collected by the sensors may correspond to clocks of different clock units. Time indicated by the different clock units has a deviation. As a result, time based on sensor data cannot be aligned, and a function like autonomous driving of the intelligent vehicle is abnormal. Therefore, how to ensure that the clocks of the data collected by the sensors are consistent to avoid an abnormal service processing result of autonomous driving of the intelligent vehicle or the like is an urgent problem to be resolved currently.

**SUMMARY**

Embodiments of this application provide a clock synchronization method of a control system and a control system, which can ensure that clocks of data collected by sensors are consistent to avoid an abnormal service processing result.

According to a first aspect, an embodiment of this application provides a clock synchronization method of a control system. The control system includes a first controller and a second controller, the first controller includes a first clock unit and a second clock unit, and the second controller includes a third clock unit. A clock of the first clock unit is different from a clock of the third clock unit, and a clock of the second clock unit is the same as the clock of the third clock unit. The method includes: The first controller and the second controller add a timestamp to sensor data by using a first clock. The first clock is the clock of the first clock unit or the clock of the third clock unit.

According to the method provided in the first aspect, in this embodiment of this application, the first controller and the second controller add a timestamp to the sensor data by using the first clock, so that timestamps of all pieces of sensor data use the first clock as a unified clock. This ensures clock consistency of the sensor data, and further improves accuracy of subsequent service processing.

In a possible implementation, the first clock is the clock of the first clock unit, and that the first controller and the second controller add a timestamp to the sensor data by using the first clock includes: The second controller synchronizes the clock of the third clock unit to the clock of the first clock unit; and both the first controller and the second controller add the timestamp to the sensor data by using the first clock.

According to the method provided in this implementation, the clock of the third clock unit in the second controller may be synchronized to the clock of the first clock unit, so that both the first controller and the second controller may add a timestamp to respective sensor data by using the first clock, so that clocks of sensor data collected by different sensors are consistent.

In a possible implementation, that the second controller synchronizes the clock of the third clock unit to the clock of the first clock unit includes: The first controller sends first time T1 to the second controller in response to a trigger signal of a periodic pulse in each periodicity, where the first time T1 is time indicated by the clock of the first clock unit at a trigger moment of the trigger signal; the second controller converts, in the periodicity, time indicated by the clock of the third clock unit into second time T2, where the second time T2 is time indicated by the clock of the first clock unit when the second controller receives the first time T1.

According to the method provided in this implementation, the first controller and the second controller synchronize the clock of the third clock unit in the second controller to the clock of the first clock unit in the first controller based on the periodic pulse, so that sensor data collected by a sensor connected to the first controller is consistent with sensor data collected by a sensor connected to the second controller.

In a possible implementation, the method further includes: The second controller obtains the second time T2 based on the first time T1, third time T3, and fourth time T4 through conversion, where the third time T3 is time indicated by the clock of the third clock unit at the trigger moment, and the fourth time T4 is time indicated by the clock of the third clock unit when the second controller receives the first time T1.

Optionally, the second time T2 satisfies the following formula 1:

$$T2=T4-T3+T1 \ (1).$$

Optionally, the periodic pulse is a pulse per second.

In a possible implementation, the control system further includes an inertial navigation system INS. The INS is separately connected to the first controller and the second controller. The method further includes: The first controller and/or the second controller receive/receives, a pulse per second sent by the INS.

According to the method provided in this implementation, it can be ensured that the pulse per second received by the first controller is consistent with the pulse per second received by the second controller, so that the synchronized clock of the third clock unit is more consistent with the clock of the first clock unit.

In a possible implementation, that the second controller synchronizes the clock of the third clock unit to the clock of the first clock unit includes: The first controller sends a time synchronization packet to the second controller based on a preset synchronization periodicity, where the time synchronization packet carries first time T1, and the first time T1 is time indicated by the clock of the first clock unit at a sending moment of the time synchronization packet; the second controller determines second time T2 based on the first time T1 and transmission duration of the time synchronization packet; and the second controller determines, in the synchronization periodicity, the time indicated by the clock of the third clock unit as the second time T2.

According to the method provided in this implementation, the second controller synchronizes, based on the time synchronization packet sent by the first controller, the clock of the third clock unit in the second controller to the clock of the first clock unit, so that sensor data collected by a sensor connected to the first controller is consistent with sensor data collected by a sensor connected to the second controller.

Optionally, the synchronization periodicity is 1 second.

In a possible implementation, the first clock is a clock of the first clock unit, and the adding, by the first controller and the second controller, a timestamp to sensor data by using the first clock includes: The second controller sends second sensor data to the first controller, where the second sensor data carries first time T1, and the first time T1 is time indicated by the clock of the third clock unit at a collection moment of the second sensor data; and the first controller converts the first time T1 carried in the second sensor data into second time T2, where the second time T2 is time indicated by the clock of the first clock unit at the collection moment of the second sensor data.

According to the method provided in this implementation, when clock synchronization is not performed on the third clock unit in the second controller, clocks of sensor data of sensors connected to the controllers are consistent.

In a possible implementation, that the first controller converts the first time T1 carried in the second sensor data into the second time T2 includes: The first controller obtains the second time T2 based on the first time T1, third time T3, and fourth time T4 through conversion. The third time T3 is time indicated by the clock of the first clock unit when the first controller receives the second sensor data, and the fourth time T4 is time indicated by the clock of the second clock unit when the first controller receives the sensor data.

According to the method provided in this implementation, the timestamp of the second sensor data can be accurately converted from the time indicated by the clock of the third clock unit to the time indicated by the clock of the first clock unit.

In a possible implementation, the second time T2 satisfies the following formula 2: T2=T3-(T4-T1) (2).

In a possible implementation, the first clock is the clock of the third clock unit, and that the first controller and the second controller add a timestamp to the sensor data by using the first clock includes: The first controller receives first sensor data, where the first sensor data carries first time T1, and the first time T1 is time indicated by the clock of the first clock unit at a collection moment of the first sensor data; and the first controller converts the first time T1 carried in the first sensor data into second time T2, where the second time T2 is time indicated by the clock of the third clock unit at the collection moment of the first sensor data.

According to the method provided in this implementation, when clock synchronization is not performed on the first clock unit in the first controller, clocks of sensor data of sensors connected to the controllers are consistent.

In a possible implementation, that the first controller converts the first time T1 carried in the first sensor data into the second time T2 includes: The first controller determines the second time T2 based on the first time T1, third time T3, and fourth time T4, where the third time T3 is time indicated by the clock of the first clock unit when the first controller receives the first sensor data, and the fourth time T4 is time indicated by the clock of the second clock unit when the first controller receives the first sensor data.

According to the method provided in this implementation, the timestamp of the first sensor data can be accurately converted from the time indicated by the clock of the first clock unit to the time indicated by the clock of the third clock unit.

In a possible implementation, the second time T2 satisfies the following formula 3: T2=T4-(T3-T1) (3).

In a possible implementation, the first clock is the clock of the third clock unit, and that the first controller and the second controller add a timestamp to the sensor data by using the first clock includes: The first controller receives first sensor data; and the first controller adds the timestamp to the first sensor data based on first time, where the first time is time indicated by the clock of the second clock unit when the first controller receives the first sensor data.

The method provided in this implementation may be applied to a scenario different from that in the foregoing implementation, and is more applicable to a scenario in which the timestamp of the first sensor data is a moment at which the first controller receives the first sensor data.

In a possible implementation, the first clock is the clock of the third clock unit, and that the first controller and the second controller add a timestamp to the sensor data by using the first clock includes: The first controller synchronizes the clock of the first clock unit to the clock of the second clock unit based on a preset synchronization periodicity; and both the first controller and the second controller add the timestamp to the sensor data by using the first clock.

Through the method provided in this implementation, efficiency of synchronizing the clock of the first clock unit to the clock of the third clock unit is higher.

According to a second aspect, an embodiment of this application provides a clock synchronization method of a control system. The control system includes a first controller and a second controller, the first controller includes a first clock unit and a second clock unit, and the second controller includes a third clock unit. A clock of the first clock unit is different from a clock of the third clock unit, and a clock of the second clock unit is the same as the clock of the third clock unit. The method includes:

The first controller adds a timestamp to sensor data by using a first clock.

The first clock is the clock of the first clock unit or the clock of the third clock unit.

In a possible implementation, the first controller sends first time T1 to the second controller in response to a trigger signal of a periodic pulse in each periodicity. The first time T1 is time indicated by the clock of the first clock unit at a trigger moment of the trigger signal.

In a possible implementation, the periodic pulse is a pulse per second.

In a possible implementation, the control system further includes an inertial navigation system INS, the INS is connected to the first controller, and the method further includes: The first controller receives a pulse per second sent by the INS.

In a possible implementation, the first clock is the clock of the first clock unit, and that the first controller adds a timestamp to the sensor data by using the first clock includes: The first controller receives second sensor data sent by the second controller, where the second sensor data carries first time T1, and the first time T1 is time indicated by the clock of the third clock unit at a collection moment of the second sensor data; and the first controller converts the first time T1 carried in the second sensor data into second time T2, where the second time T2 is time indicated by the clock of the first clock unit at the collection moment of the second sensor data.

In a possible implementation, that the first controller converts the first time T1 carried in the second sensor data into the second time T2 includes: The first controller obtains the second time T2 based on the first time T1, third time T3, and fourth time T4 through conversion. The third time T3 is time indicated by the clock of the first clock unit when the first controller receives the second sensor data, and the fourth time T4 is time indicated by the clock of the second clock unit when the first controller receives the sensor data.

In a possible implementation, the second time T2 satisfies the following formula 2:

$$T2=T3-(T4-T1) \ (2).$$

In a possible implementation, the first clock is the clock of the third clock unit, and that the first controller adds a timestamp to the sensor data by using the first clock includes: The first controller receives first sensor data, where the first sensor data carries first time T1, and the first time T1 is time indicated by the clock of the first clock unit at a collection moment of the first sensor data; and the first controller converts the first time T1 carried in the first sensor data into second time T2, where the second time T2 is time indicated by the clock of the third clock unit at the collection moment of the first sensor data.

In a possible implementation, that the first controller converts the first time T1 carried in the first sensor data into the second time T2 includes: The first controller determines the second time T2 based on the first time T1, third time T3, and fourth time T4, where the third time T3 is time indicated by the clock of the first clock unit when the first controller receives the first sensor data, and the fourth time T4 is time indicated by the clock of the second clock unit when the first controller receives the first sensor data.

In a possible implementation, the second time T2 satisfies the following formula 3:

$$T2=T4-(T3-T1) \ (3).$$

In a possible implementation, the first clock is the clock of the third clock unit, and that the first controller adds a timestamp to the sensor data by using the first clock includes: The first controller receives first sensor data; and the first controller adds the timestamp to the first sensor data based on first time, where the first time is time indicated by the clock of the second clock unit when the first controller receives the first sensor data.

In a possible implementation, the first clock is the clock of the third clock unit, and that the first controller adds a timestamp to the sensor data by using the first clock includes: The first controller synchronizes the clock of the first clock unit to the clock of the second clock unit based on a preset synchronization periodicity; and the first controller adds the timestamp to the sensor data by using the first clock.

According to a third aspect, an embodiment of this application provides a clock synchronization method of a control system. The control system includes a first controller and a second controller, the first controller includes a first clock unit and a second clock unit, and the second controller includes a third clock unit. A clock of the first clock unit is different from a clock of the third clock unit, and a clock of the second clock unit is the same as the clock of the third clock unit. The method includes: The second controller adds a timestamp to sensor data by using a first clock, where the first clock is the clock of the first clock unit or the clock of the third clock unit

In a possible implementation, the first clock is the clock of the first clock unit, and that the second controller adds a timestamp to the sensor data by using the first clock includes: The second controller synchronizes the clock of the third clock unit to the clock of the first clock unit; and the second controller adds the timestamp to the sensor data by using the first clock.

In a possible implementation, that the second controller synchronizes the clock of the third clock unit to the clock of the first clock unit includes: The second controller receives first time sent by the first controller, where the first time is time indicated by the clock of the first clock unit at a trigger moment of a trigger signal, the trigger signal is a signal of a periodic pulse in each periodicity, and the first controller includes the first clock unit; and the second controller converts, in the periodicity, time indicated by the clock of the third clock unit into second time, where the second time is time indicated by the clock of the first clock unit when the second controller receives the first time, and the second controller includes the third clock unit.

In a possible implementation, the method further includes: The second controller obtains the second time T2 based on the first time T1, third time T3, and fourth time T4 through conversion, where the third time T3 is time indicated by the clock of the third clock unit at the trigger moment, and the fourth time T4 is time indicated by the clock of the third clock unit when the second controller receives the first time T1.

In a possible implementation, the second time T2 satisfies the following formula 1:

$$T2 = T4 - T3 + T1 \quad (1).$$

In a possible implementation, the periodic pulse is a pulse per second.

In a possible implementation, the control system further includes an inertial navigation system INS, the INS is connected to the second controller, and the method further includes: The second controller receives a pulse per second sent by the INS.

In a possible implementation, the first clock is the clock of the first clock unit, and that the second controller adds a timestamp to the sensor data by using the first clock includes: The second controller sends second sensor data to the first controller, where the second sensor data carries first time T1, and the first time T1 is time indicated by the clock of the third clock unit at a collection moment of the second sensor data.

According to a fourth aspect, an embodiment of this application provides a control system, including a first controller and a second controller. The first controller includes a first clock unit and a second clock unit, and the second controller includes a third clock unit. A clock of the first clock unit is different from a clock of the third clock unit, and a clock of the second clock unit is the same as the clock of the third clock unit. The first controller is configured to add a timestamp to sensor data by using a first clock; and the second controller adds a timestamp to sensor data by using the first clock. The first clock is the clock of the first clock unit or the clock of the third clock unit.

In a possible implementation, the first controller is specifically configured to: synchronize the clock of the third clock unit to the clock of the first clock unit; and add the timestamp to the sensor data by using the first clock. The second controller is specifically configured to add the timestamp to the sensor data by using the first clock. The first clock is the clock of the first clock unit.

In a possible implementation, the first controller is specifically configured to send first time T1 to the second controller in response to a trigger signal of a periodic pulse in each periodicity. The first time T1 is time indicated by the clock of the first clock unit at a trigger moment of the trigger signal. The second controller is specifically configured to convert, in the periodicity, time indicated by the clock of the third clock unit into second time T2. The second time T2 is time indicated by the clock of the first clock unit when the second controller receives the first time T1.

In a possible implementation, the second controller is specifically configured to obtain the second time T2 based on the first time T1, third time T3, and fourth time T4 through conversion. The third time T3 is time indicated by the clock of the third clock unit at the trigger moment, and the fourth time T4 is time indicated by the clock of the third clock unit when the second controller receives the first time T1.

In a possible implementation, the second time T2 satisfies the following formula 1:

$$T2 = T4 - T3 + T1 \ (1).$$

In a possible implementation, the periodic pulse is a pulse per second.

In a possible implementation, the control system further includes an inertial navigation system INS. The INS is separately connected to the first controller and the second controller. The first controller is further configured to receive a pulse per second sent by the INS; and/or the second controller is further configured to receive a pulse per second sent by the INS.

In a possible implementation, the second controller is specifically configured to send second sensor data to the first controller. The second sensor data carries first time T1, and the first time T1 is time indicated by the clock of the third clock unit at a collection moment of the second sensor data. The first controller is specifically configured to convert the first time T1 carried in the second sensor data into second time T2. The second time T2 is time indicated by the clock of the first clock unit at the collection moment of the second sensor data. The first clock is the clock of the first clock unit.

In a possible implementation, the first controller is specifically configured to obtain the second time T2 based on the first time T1, third time T3, and fourth time T4 through conversion. The third time T3 is time indicated by the clock of the first clock unit when the first controller receives the second sensor data, and the fourth time T4 is time indicated by the clock of the second clock unit when the first controller receives the sensor data.

In a possible implementation, the second time T2 satisfies the following formula 2:

$$T2 = T3 - (T4 - T1) \ (2).$$

In a possible implementation, the first controller is specifically configured to: receive first sensor data, where the first sensor data carries first time T1, and the first time T1 is time indicated by the clock of the first clock unit at a collection moment of the first sensor data; and convert the first time T1 carried in the first sensor data into second time T2, where the second time T2 is time indicated by the clock of the third clock unit at the collection moment of the first sensor data. The first clock is the clock of the third clock unit.

In a possible implementation, the first controller is specifically configured to determine the second time T2 based on the first time T1, third time T3, and fourth time T4. The third time T3 is time indicated by the clock of the first clock unit when the first controller receives the first sensor data, and the fourth time T4 is time indicated by the clock of the second clock unit when the first controller receives the first sensor data.

In a possible implementation, the second time T2 satisfies the following formula 3:

$$T2 = T4 - (T3 - T1) \ (3).$$

In a possible implementation, the first controller is specifically configured to: receive first sensor data. The first controller adds a timestamp to the first sensor data based on first time. The first time is time indicated by the clock of the second clock unit when the first controller receives the first sensor data. The first clock is the clock of the third clock unit.

In a possible implementation, the first controller is specifically configured to: synchronize the clock of the first clock unit to the clock of the second clock unit based on a preset synchronization periodicity; and add a timestamp to the sensor data by using the first clock. The second controller is specifically configured to add a timestamp to the sensor data by using the first clock, where the first clock is the clock of the third clock unit.

According to a fifth aspect, an embodiment of this application provides a control apparatus used in a control system. The control system includes a first controller and a second controller. The first controller includes a first clock unit and a second clock unit, and the second controller includes a third clock unit. A clock of the first clock unit is different from a clock of the third clock unit, and a clock of the second clock unit is the same as the clock of the third clock unit. The control apparatus is used in the first controller, and the control apparatus includes a processing unit, configured to add a timestamp to sensor data by using a first clock. The first clock is the clock of the first clock unit or the clock of the third clock unit.

In a possible implementation, the control apparatus further includes a transceiver unit, configured to send first time T1 to the second controller in response to a trigger signal of a periodic pulse in each periodicity. The first time T1 is time indicated by the clock of the first clock unit at a trigger moment of the trigger signal. The first clock is the clock of the first clock unit.

In a possible implementation, the periodic pulse is a pulse per second.

In a possible implementation, the control system further includes an inertial navigation system INS, the INS is connected to the first controller, and the transceiver unit is further configured to receive a pulse per second sent by the INS.

In a possible implementation, the control apparatus further includes a transceiver unit, configured to receive second sensor data sent by the second controller. The second sensor data carries first time T1, and the first time T1 is time indicated by the clock of the third clock unit at a collection moment of the second sensor data. The processing unit is specifically configured to convert the first time T1 carried in the second sensor data into second time T2. The second time T2 is time indicated by the clock of the first clock unit at the collection moment of the second sensor data. The first clock is the clock of the first clock unit.

In a possible implementation, the processing unit is specifically configured to obtain the second time T2 based on the first time T1, third time T3, and fourth time T4 through conversion. The third time T3 is time indicated by the clock of the first clock unit when the first controller receives the second sensor data, and the fourth time T4 is time indicated by the clock of the second clock unit when the first controller receives the sensor data.

In a possible implementation, the second time T2 satisfies the following formula 2:

$$T2=T3-(T4-T1)\ (2).$$

In a possible implementation, the control apparatus further includes: a transceiver unit, configured to receive first sensor data. The first sensor data carries first time T1, and the first time T1 is time indicated by the clock of the first clock unit at a collection moment of the first sensor data. The processing unit is specifically configured to convert the first time T1 carried in the first sensor data into second time T2. The second time T2 is time indicated by the clock of the third clock unit at the collection moment of the first sensor data. The first clock is the clock of the third clock unit.

In a possible implementation, the processing unit is specifically configured to determine the second time T2 based on the first time T1, third time T3, and fourth time T4. The third time T3 is time indicated by the clock of the first clock unit when the first controller receives the first sensor data, and the fourth time T4 is time indicated by the clock of the second clock unit when the first controller receives the first sensor data.

In a possible implementation, the second time T2 satisfies the following formula 3:

$$T2=T4-(T3-T1)\ (3).$$

In a possible implementation, the control apparatus further includes: a transceiver unit, configured to receive first sensor data. The processing unit adds a timestamp to the first sensor data based on first time. The first time is time indicated by the clock of the second clock unit when the first controller receives the first sensor data. The first clock is the clock of the third clock unit.

In a possible implementation, the processing unit is specifically configured to: synchronize the clock of the first clock unit to the clock of the second clock unit based on a preset synchronization periodicity. The first clock is the clock of the third clock unit. Both the first controller and the second controller add a timestamp to the sensor data by using the first clock.

According to a sixth aspect, an embodiment of this application provides a control apparatus used in a control system. The control system includes a first controller and a second controller, the first controller includes a first clock unit and a second clock unit, and the second controller includes a third clock unit. A clock of the first clock unit is different from a clock of the third clock unit, and a clock of the second clock unit is the same as the clock of the third clock unit. The control apparatus is used in the second controller, and the control apparatus includes a processing unit, configured to add a timestamp to sensor data by using a first clock. The first clock is the clock of the first clock unit or the clock of the third clock unit.

In a possible implementation, the processing unit is specifically configured to: synchronize the clock of the third clock unit to the clock of the first clock unit, where the first clock is the clock of the first clock unit; and add a timestamp to the sensor data by using the first clock.

In a possible implementation, the control apparatus further includes a transceiver unit, configured to receive first time sent by the first controller. The first time is time indicated by the clock of the first clock unit at a trigger moment of a trigger signal, and the trigger signal is a signal of a periodic pulse in each periodicity. The first controller includes the first clock unit. The processing unit is specifically configured to convert, in the periodicity, time indicated by the clock of the third clock unit into second time. The second time is time indicated by the clock of the first clock unit when the second controller receives the first time. The second controller includes the third clock unit.

In a possible implementation, the processing unit is specifically configured to obtain the second time T2 based on the first time T1, third time T3, and fourth time T4 through conversion. The third time T3 is time indicated by the clock of the third clock unit at the trigger moment, and the fourth time T4 is time indicated by the clock of the third clock unit when the second controller receives the first time T1.

In a possible implementation, the second time T2 satisfies the following formula 1:

$$T2=T4-T3+T1 \ (1).$$

In a possible implementation, the periodic pulse is a pulse per second.

In a possible implementation, the control system further includes an inertial navigation system INS, the INS is connected to the second controller, and the transceiver unit is further configured to receive a pulse per second sent by the INS.

In a possible implementation, the control apparatus further includes a transceiver unit, configured to send second sensor data to the first controller. The second sensor data carries first time T1, and the first time T1 is time indicated by the clock of the third clock unit at a collection moment of the second sensor data. The first clock is the clock of the first clock unit.

For beneficial effects of the clock synchronization method of the control system provided in the second aspect to the sixth aspect and the possible implementations of the second aspect to the sixth aspect, refer to beneficial effects brought by the first aspect and the possible implementations of the first aspect. Details are not described herein again.

According to a seventh aspect, an embodiment of this application provides an electronic device, including a processor and a memory. The memory is configured to store a computer program, and the processor is configured to invoke and run the computer program stored in the memory, to perform the method according to the second aspect or the possible implementations of the second aspect.

According to an eighth aspect, an embodiment of this application provides an electronic device, including a processor and a memory. The memory is configured to store a computer program, and the processor is configured to invoke and run the computer program stored in the memory, to perform the method according to the third aspect or the possible implementations of the third aspect.

According to a ninth aspect, an embodiment of this application provides a chip, including a processor, configured to invoke computer instructions from a memory and run the computer instructions, so that a device in which the chip is installed performs the method according to the second aspect or the possible implementations of the second aspect.

According to a tenth aspect, an embodiment of this application provides a chip, including a processor, configured to invoke computer instructions from a memory and run the computer instructions, so that a device in which the chip is installed performs the method according to the third aspect or the possible implementations of the third aspect.

According to an eleventh aspect, an embodiment of this application provides a computer-readable storage medium, configured to store computer program instructions. A computer program enables a computer to perform the method according to the second aspect or the possible implementations of the second aspect.

According to a twelfth aspect, an embodiment of this application provides a computer-readable storage medium, configured to store computer program instructions. A computer program enables a computer to perform the method according to the third aspect or the possible implementations of the third aspect.

According to a thirteenth aspect, an embodiment of this application provides a computer program product, including computer program instructions. The computer program instructions enable a computer to perform the method according to the second aspect or the possible implementations of the second aspect.

According to a fourteenth aspect, an embodiment of this application provides a computer program product, including computer program instructions. The computer program instructions enable a computer to perform the method according to the third aspect or the possible implementations of the third aspect.

According to a fifteenth aspect, an embodiment of this application provides a movable terminal, where the movable terminal includes two controllers and at least one sensor separately connected to the two controllers.

**BRIEF DESCRIPTION OF DRAWINGS**

FIG. 1 is a schematic diagram of a structure of a control system 100 according to an embodiment of this application;
FIG. 2 is a schematic diagram of a structure of another control system according to an embodiment of this application;
FIG. 3 is a schematic diagram of a structure of another control system according to an embodiment of this application;
FIG. 4 is a schematic diagram of a structure of another control system according to an embodiment of this application;
FIG. 5 is a schematic diagram of a structure of another control system according to an embodiment of this application;
FIG. 6 is a schematic diagram of a structure of another control system according to an embodiment of this application;
FIG. 7 is a schematic diagram of a structure of a control apparatus 200 according to an embodiment of this application; and
FIG. 8 is another schematic block diagram of a control apparatus 300 according to an embodiment of this application.

## DESCRIPTION OF EMBODIMENTS

The following describes technical solutions of this application with reference to accompanying drawings.

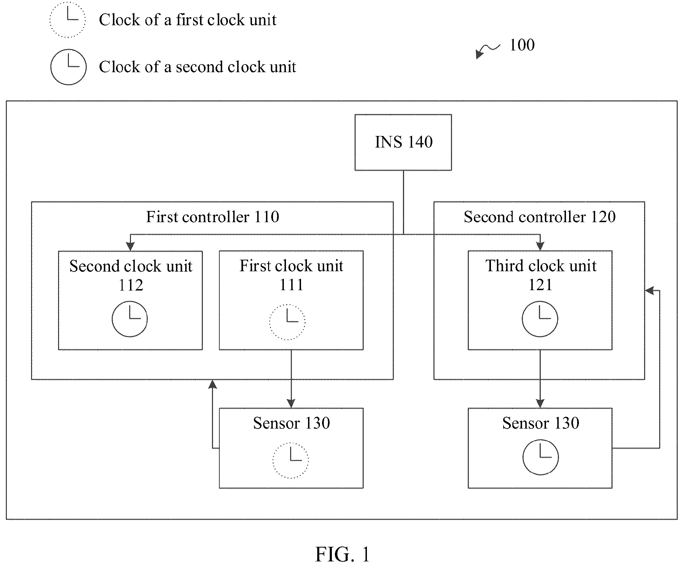

FIG. 1 is a schematic diagram of a structure of a control system 100 according to an embodiment of this application. The control system may be deployed in any electronic device. The electronic device may be a terminal device, for example, an intelligent vehicle, an intelligent robot, a smartphone, a tablet computer, a notebook computer, or a desktop computer. Alternatively, the electronic device may be connected to any one of the foregoing terminal devices in a wired or wireless manner. In some embodiments, the electronic device may alternatively be a server.

As shown in FIG. 1, the control system includes at least a first controller 110 and a second controller 120. The first controller 110 and the second controller 120 each may be a chip, a chip system, another functional module that can invoke and execute a program, or the like, for example, may be a system on chip (System on a Chip, SOC).

Two clock units may be deployed in the first controller 110, and a single-clock unit may be deployed in the second controller 120.

In some embodiments, the first controller 110 and the second controller 120 in the control system 100 may share computing load; or may be backup apparatuses for each other. For example, the second controller 120 may be a backup apparatus of the first controller 110, and complete computing load of the first controller 110 when the first controller 110 is disabled or abnormal. For another example, the first controller 110 may be a backup apparatus of the second controller 120, and complete computing load of the second controller 120 when the second controller 110 is disabled or abnormal.

The two clock units may be deployed in the first controller 110, for example, a first clock unit 111 and a second clock unit 112. Generally, clocks of the two clock units are different. For example, a clock of the first clock unit 111 may be a crystal oscillator clock, that is, a clock that relies on the crystal oscillator to generate a clock pulse signal; and a clock of the second clock unit 112 may be a coordinated universal time (Coordinated Universal Time, UTC) clock, where the UTC is time based on atomic seconds, and may also be expressed as same time in the world, universal standard time, or international coordinated time. Optionally, the clock of the first clock unit 111 may be configured to record time of sensor data, and the clock of the second clock unit 112 may be configured to record time of a system log.

The single-clock unit may be deployed in the second controller 120, for example, a third clock unit 121. A clock of the third clock unit 121 is different from the clock of the first clock unit 111, and is the same as the clock of the second clock unit 112. For example, the third clock unit may be the UTC clock. Optionally, the third clock unit 121 may be configured to record the time of the sensor data. It should be noted that the clock of the third clock unit 121 is the same as the clock of the second clock unit, that is, time indicated by the clock of the third clock unit is the same as time indicated by the second clock unit at a same moment.

The first controller 110 and the second controller 120 are usually connected to a sensor 130. The sensor 130 includes, for example, at least one of an image sensor, a radar sensor (for example, a millimeter-wave radar, a laser radar, or an ultrasonic radar), and an inertia sensor (inertial measurement unit, IMU). The first controller 110 and the second controller 120 each may be connected to at least one sensor 130. A quantity of sensors 130 is not limited in this application.

For example, when the first controller 110 and the second controller 120 are configured to share computing load, the first clock unit 111 in the first controller 110 and the third clock unit 121 in the second controller 120 are respectively connected to different sensors, and respectively provide clocks for the sensors connected to the first clock unit 111 and the third clock unit 121. When the first controller 110 and the second controller 120 are backup apparatuses for each other, the sensors connected to the first clock unit 111 in the first controller 110 and the third clock unit 121 in the second controller 120 may be the same or different.

In some embodiments, the control system 100 further includes an inertial navigation system (inertial navigation system, INS) 140. For example, the INS may be separately connected to the second clock unit 112 in the first controller 110 and the third clock unit 121 in the second controller 120. It should be understood that the INS may also be used as a sensor to connect to the first clock unit 111 in the first controller 110 and/or the third clock unit 121 in the second controller 120, and uses the clock provided by the connected clock unit to record sensor data.

An autonomous driving field is used as an example. An intelligent vehicle may execute a related service program based on sensor data, for example, perform autonomous driving calculation. In the foregoing control system, the first controller records, by using the clock of the first clock unit, data collection time of a sensor connected to the first controller, and the second controller records, by using the clock of the third clock unit, data collection time of a sensor connected to the second controller. When the clock of the first clock unit is inconsistent with the clock of the third clock unit, time of the sensor data cannot be aligned. This causes an inaccurate calculation result of the service program and affects an autonomous driving function. Therefore, how to ensure clock consistency of the sensor data based on the foregoing control system is an urgent problem to be resolved.

For the foregoing problem, in this embodiment of this application, both the first controller and the second controller add a timestamp to the sensor data by using a first clock as a unified clock, where the first clock is the clock of the first clock unit or the clock of the third clock unit. Data collected by the sensors connected to the controllers is recorded by using a same clock, to ensure clock consistency of the sensor data.

It should be understood that a clock synchronization method of a control system provided in this embodiment of this application may be applied to the control system 100. The following describes in detail the technical solutions of this application by using specific embodiments.

The first controller adds, by using the first clock, a timestamp to the sensor data of the sensor connected to the first controller. For example, the first controller may add a timestamp to the sensor data at a collection moment of the sensor data by using the first clock, or the first controller may add a timestamp to the sensor data at a receiving moment of the sensor data by using the first clock. It should be noted that the receiving moment of the sensor data is a moment at which the first controller receives the sensor data sent by the sensor.

For example, a control program of the first controller includes a driver of each sensor. When the sensor collects data, the first controller may record, by using the driver corresponding to the sensor and by using the first clock, time at which the sensor collects the data, and use the time as a timestamp of the collected sensor data.

Similar to the first controller, the second controller adds, by using a second clock, a timestamp to sensor data of a sensor connected to the second controller. For example, the second controller may add a timestamp to the sensor data at a collection moment of the sensor data by using the first clock; or the second controller may add a timestamp to the sensor data at a receiving moment of the sensor data by using the first clock.

For example, a control program of the second controller includes a driver of each sensor. When the sensor collects data, the second controller may record, by using the driver of the sensor and by using the first clock, time at which the sensor collects the data, and use the time as a timestamp of the collected sensor data.

That the first controller and the second controller add a timestamp to the sensor data by using the first clock includes two possible ways.

1. The first clock unit in the first controller and the third clock unit in the second controller synchronize the clocks to the first clock. For example, when the first clock is the clock of the first time unit, the third clock unit in the second controller synchronizes the clock to the clock of the first time unit, or when the first clock is the clock of the third clock unit, the first clock unit in the first controller synchronizes the clock to the clock of the third clock unit. Therefore, both the first controller and the second controller may add, based on the first clock, a timestamp to the sensor data collected by the sensors connected to the first controller and the second controller.

Optionally, when the first clock unit and the third clock unit synchronize the clocks to the first clock, the first controller keeps the clock of the second clock unit unchanged. It should be noted that the unchanged clock of the second clock unit means that the clock of the second clock unit is not synchronized with any other clock, but the clock of the second clock unit can still indicate a change of time, for example, the clock of the second clock unit is kept as a UTC clock, and is not synchronized to a crystal oscillator clock.

2. The clock of the first clock unit in the first controller and the clock of the third clock unit in the second controller keep their clocks unchanged. For example, the first clock unit is kept as a crystal oscillator clock, and the third clock unit is kept as a UTC clock. In this case, the first controller or the second controller converts a timestamp of the sensor data into a timestamp of the first clock. For example, the first clock is the clock of the first clock unit, and the first controller converts, based on the first clock, a timestamp of sensor data received by the second controller into the timestamp corresponding to the first clock. For another example, the first clock is the clock of the third clock unit, and the second controller converts, based on the first clock, a timestamp of sensor data received by the first controller into the timestamp corresponding to the first clock.

In this embodiment of this application, the first controller and the second controller add a timestamp to the sensor data by using the first clock, so that timestamps of all pieces of sensor data use the first clock as a unified clock. This ensures clock consistency of the sensor data, and further improves accuracy of subsequent service processing.

The following describes how the first controller and the second controller add a timestamp to the sensor data by using the first clock in this embodiment of this application by using several specific implementations as an example.

Implementation 1:

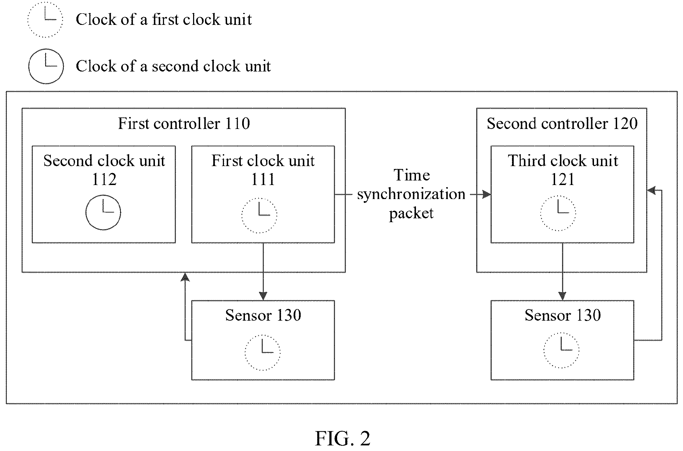

Refer to FIG. 2. In this implementation, a clock of a third time unit in the second controller is synchronized to a clock of a first clock unit in the first controller based on a time synchronization packet sent by the first controller. Specifically, S11 to S13 are included below.

S11: The first controller sends a time synchronization packet to the second controller based on a preset synchronization periodicity, where the time synchronization packet carries first time, and the first time is time indicated by the clock of the first clock unit at a sending moment of the time synchronization packet.

S12: The second controller determines second time based on the first time and transmission duration of the time synchronization packet.

S13: The second controller determines, in the synchronization periodicity, time indicated by the clock of the third clock unit as the second time.

For S12, it should be noted that the first time carried in the time synchronization packet sent by the first controller is the time indicated by the clock of the first clock unit at the sending moment of the synchronization packet, and there is a time difference between a moment at which the second controller receives the time synchronization packet and the first time. The time difference is the transmission duration of the time synchronization packet. Therefore, the second controller may determine, based on the first time and the transmission duration of the time synchronization packet, time at a moment at which the clock of the first clock unit receives the time synchronization packet, that is, the second time.

For example, the second time may be a sum of the first time and the transmission duration of the time synchronization packet.

For example, the transmission duration of the time synchronization packet may be measured by transmitting a following packet between the first controller and the second controller.

Optionally, the time synchronization packet may be a generalized precision time protocol (generalized precision time protocol, gPTP) packet.

For example, the preset synchronization periodicity may be 1 second. In other words, the first controller sends the time synchronization packet to the second controller per second, and the second controller obtains the second time per second based on the first time in the time synchronization packet, and uses the second time as the time of the clock of the third clock unit in this second. In this case, the second controller updates the second time on the clock of the third clock unit every second, to synchronize the clock of the third clock unit to the clock of the first clock unit.

In this implementation 1, the second controller synchronizes, based on the time synchronization packet sent by the first controller, the clock of the third clock unit in the second controller to the clock of the first clock unit, so that sensor data collected by a sensor connected to the first controller is consistent with sensor data collected by a sensor connected to the second controller.

Implementation 2:

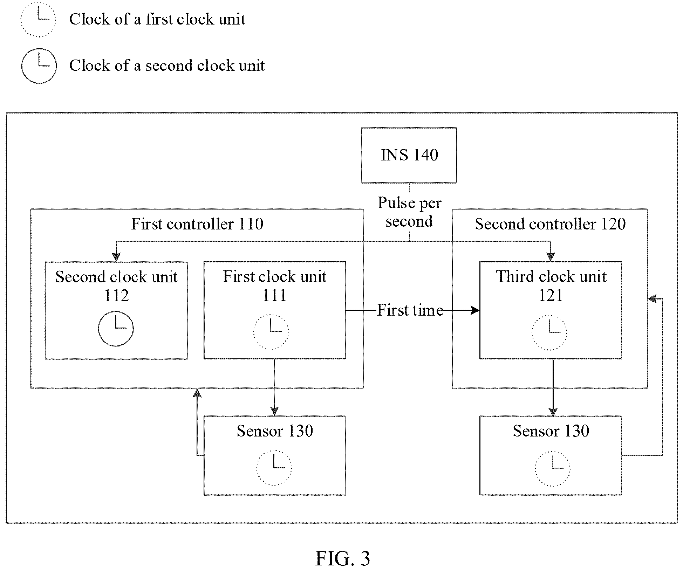

Refer to FIG. 3. In this implementation, the first controller and the second controller synchronize a clock of a third clock unit in the second controller to a clock of a first clock unit in the first controller based on a periodic pulse. Specifically, S21 and S22 are included below.

S21: The first controller sends first time T1 to the second controller in response to a trigger signal of the periodic pulse in each periodicity, where the first time T1 is time indicated by the clock of the first clock unit at a trigger moment of the trigger signal.

S22: The second controller converts, in the periodicity, time indicated by the clock of the third clock unit into second time T2, where the second time T2 is time indicated by the clock of the first clock unit when the second controller receives the first time T1.

In this implementation, the first controller sends the first time T1 to the second controller in each periodicity of the periodic pulse. Correspondingly, the second controller receives, in each periodicity of the periodic pulse, the first time T1 sent by the first controller. In addition, the second controller uses, in each periodicity of the periodic pulse as time of the third clock unit in the periodicity, the time indicated by the clock of the first clock unit when the second controller receives the first time T1, that is, the clock of the third clock unit is synchronized to the clock of the first clock unit.

For example, the second controller converts the first time T1 sent by the first controller into the second time T2, that is, converts the time indicated by the clock of the first clock unit at the trigger moment of the trigger signal into the time indicated by the clock of the first clock unit when the second controller receives the first time T1.

For example, that the second controller converts the first time T1 into the second time T2 may be implemented according to the following formula 1:

$$T2=T4-T3+T1 \ (1),$$

, where the third time T3 is time indicated by the clock of the third clock unit at the trigger moment, and the fourth time T4 is time indicated by the clock of the third clock unit when the second controller receives the first time T1.

Optionally, the periodic pulse may be a pulse per second (Pulse Per Second, PPS).

The PPS may be sent by an INS to the first controller and/or the second controller in FIG. 3. For example, the INS is connected to a second clock unit in the first controller, and/or the INS is connected to a third clock unit in the second controller. In this embodiment of this application, that the INS sends the PPS is merely used as an example, and does not constitute any limitation on this application. The PPS may alternatively be sent by any pulse generator.

For example, after the first controller and the second controller receive trigger signals of the PPS in one periodicity, the first controller records, by using the clock of the first clock unit, time at which the trigger signal is triggered, that is, the first time T1, and the second controller records, by using the clock of the third clock unit, time at which the trigger signal is triggered, that is, the third time T3.

Optionally, a pulse signal of the periodic pulse may be a high-level signal or a low-level signal. This is not limited in this application.

In this implementation 2, the first controller and the second controller synchronize the clock of the third clock unit in the second controller to the clock of the first clock unit in the first controller based on the periodic pulse, so that sensor data collected by a sensor connected to the first controller is consistent with sensor data collected by a sensor connected to the second controller.

In this embodiment of this application, based on the foregoing implementation 2 and implementation 3, the clock of the third clock unit in the second controller may be synchronized to the clock of the first clock unit, so that both the first controller and the second controller may add a timestamp to respective sensor data by using the first clock, so that clocks of sensor data collected by different sensors are consistent.

Implementation 3:

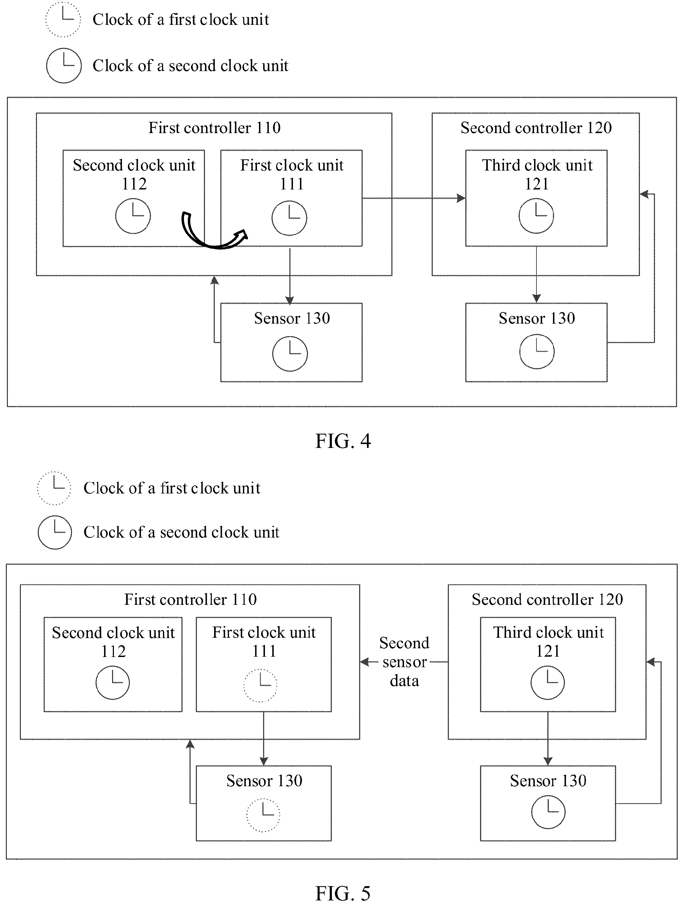

Refer to FIG. 4. In this implementation, the first controller synchronizes a clock of a first clock unit to a clock of a second clock unit based on a preset synchronization periodicity, so that both the first controller and the second controller add a timestamp to sensor data by using the first clock.

In the implementation 3, the first controller can synchronize the clock of the first clock unit to a clock of a third clock unit without interacting with the second controller.

For example, after entering a clock synchronization process, the first controller uses, in each synchronization periodicity, time indicated by the clock of the second clock unit as time of the first clock unit in the synchronization periodicity, where the clock of the second clock unit is the same as the clock of the third clock unit, that is, at each moment, the time indicated by the clock of the second clock unit is the same as time indicated by the clock of the third clock unit. That is, the clock of the first clock unit is synchronized to the clock of the third clock unit.

Optionally, the synchronization periodicity is 1 second.

In the foregoing implementations 1 to 3, the first clock unit in the first controller and the third clock unit in the second controller implement clock synchronization, that is, the sensor data output by the first controller and the second controller both have timestamps under a same clock. Based on this, a service program (for example, an autonomous driving calculation module) may be deployed in any controller.

In the following implementations 4 to 6, the clock of the first clock unit in the first controller and the clock of the third clock unit in the second controller keep their clocks unchanged, and the first controller and the second controller implement clock consistency of the sensor data by converting timestamps of the sensor data.

Implementation 4:

Refer to FIG. 5. The first controller and the second controller use the clock of the first clock unit as a unified clock, and add a timestamp to the sensor data when clock synchronization is not performed on the third clock unit. Specifically, S31 and S32 are included.

S31: The second controller sends second sensor data to the first controller, where the second sensor data carries first time T1, and the first time T1 is time indicated by a clock of the third clock unit at a collection moment of the second sensor data.

S32: The first controller converts the first time T1 carried in the second sensor data into second time T2, where the second time T2 is time indicated by the clock of the first clock unit at the collection moment of the second sensor data.

The second sensor data is data collected by a sensor connected to the second controller.

It should be noted that the collection moment of the second sensor data may be a moment at which the second sensor connected to the second controller collects the second sensor data, or may be a moment at which the second controller receives the second sensor data sent by the sensor.

In S32, the first controller converts the time that is indicated by the clock of the third clock unit at the collection moment and that is carried in the second sensor data into the time indicated by the clock of the first clock unit at the collection moment, that is, the first controller adds a timestamp to the second sensor data by using the clock of the first clock unit.

It should be understood that the first controller further adds a timestamp to first sensor data by using the clock of the first clock unit. The first sensor data is data collected by a sensor connected to the first controller.

For example, that the first controller converts the first time T1 carried in the second sensor data into the second time T2 may be implemented according to the following formula 2:

$$T2=T3-(T4-T1) \text{ (2)},$$

where

the third time T3 is time indicated by the clock of the first clock unit when the first controller receives the second sensor data, and the fourth time T4 is time indicated by a clock of a second clock unit when the first controller receives the sensor data.

For example, a moment at which the first controller receives the second sensor data is to record the time indicated by the clock of the first clock unit and the time indicated by the clock of the second clock unit.

In the implementation 4, when clock synchronization is not performed on the third clock unit in the second controller, clocks of sensor data of sensors connected to the controllers are consistent.

Implementation 5:

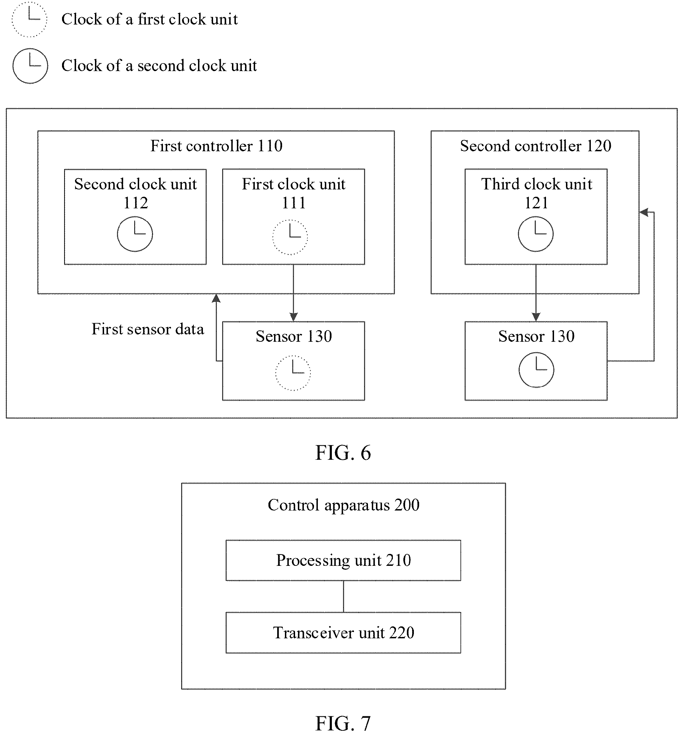

Refer to FIG. 6. The first controller and the second controller use a clock of a third clock unit as a same clock, and add a timestamp to sensor data when clock synchronization is not performed on a first clock unit. Specifically, S41 and S42 are included.

S41: The first controller receives first sensor data, where the first sensor data carries first time T1, and the first time T1 is time indicated by a clock of a first clock unit at a collection moment of the first sensor data.

S42: The first controller converts the first time T1 carried in the first sensor data into second time T2, where the second time T2 is time indicated by the clock of the third clock unit at the collection moment of the first sensor data.

The first sensor data is data collected by a sensor connected to the first controller.

In the fifth implementation, the collection moment of the first sensor data is a moment at which the sensor connected to the first controller collects the first sensor data.

In S42, the first controller converts the time that is indicated by the clock of the first clock unit at the collection moment of the first sensor data and that is carried in the first sensor data into the time indicated by the clock of the third clock unit at the collection moment of the first sensor data, that is, the first controller adds a timestamp to the first sensor data by using the clock of the third clock unit.

It should be understood that the second controller adds a timestamp to second sensor data by using the clock of the third clock unit. The second sensor data is data collected by a sensor connected to the second controller.

For example, that the first controller converts the first time T1 carried in the first sensor data into the second time T2 may be implemented according to the following formula 3:

$$T2=T4-(T3-T1) \text{ (3)},$$

where

the third time T3 is time indicated by the clock of the first clock unit when the first controller receives the first sensor data, and the fourth time T4 is time indicated by a clock of a second clock unit when the first controller receives the first sensor data.

For example, at a moment at which the first controller receives the first sensor data, the first controller records the time indicated by the clock of the first clock unit, that is, the third time T3, and the time indicated by the clock of the second clock unit, that is, the fourth time T4.

In the implementation 5, when clock synchronization is not performed on the first clock unit in the first controller, clocks of sensor data of sensors connected to the controllers are consistent.

Implementation 6:

Still refer to FIG. 6. The implementation 6 is similar to the foregoing implementation 5. A difference lies in that the first time T1 carried in the first sensor data is not the time at the collection moment, but time at a receiving moment at which the first controller receives the first sensor data.

S51: The first controller receives first sensor data.

S52: The first controller adds a timestamp to the first sensor data based on first time, where the first time is time indicated by a clock of a second clock unit when the first controller receives the first sensor data.

The first sensor data is data collected by a sensor connected to the first controller.

For example, at a moment at which the first controller receives the first sensor data, the first controller records the time indicated by the clock of the second clock unit. The clock of the second clock unit is the same as a clock of a third clock unit in the second controller, that is, at a same moment, the time indicated by the clock of the second clock unit is the same as time indicated by the third clock unit.

Further, the first controller adds the first time to the first sensor data as a timestamp of the first sensor data.

It should be understood that the second controller adds a timestamp to second sensor data by using the clock of the third clock unit. The second sensor data is data collected by a sensor connected to the second controller.

The implementation 6 and the foregoing implementation 5 may be applied to different scenarios. The implementation 6 is more applicable to a scenario in which the timestamp of the first sensor data is the moment at which the first controller receives the first sensor data.

Implementation 7:

Different from the foregoing implementations 1 to 6, in the implementation 7, timestamps, in a first clock, of sensor data under different clocks are determined based on a time synchronization log. It should be noted that in the implementation 7, the sensor data may be system log data.

For example, the first controller records time of the sensor data and system log time by using clocks of different clock units. For example, the first controller records, by using a clock of a first clock unit, data collection time of a sensor connected to the first controller (the time may be used as a timestamp of the sensor data), and the first controller records system log time by using a clock of a second clock unit. When clocks of the first clock unit and the second clock unit are inconsistent, the time of the sensor data cannot be aligned with the system log time. Consequently, log problem analysis may be inaccurate or even fail.

For the foregoing problem, in the implementation 7, the time synchronization log is introduced to convert the time (referred to as first time in the following) that is of the sensor data and that is recorded by the first clock unit into time (referred to as second time in the following) corresponding to the second clock unit, so that the time of the sensor data and the system log time are time under a same clock.

For example, the first controller records a time synchronization log once on at least one of the following occasions:

an occasion on which a time synchronization unit is started;
an occasion on which the clock of the second clock unit sends time hopping; and
each time recording periodicity.

At the at least one of the occasions, the first controller records time indicated by the clock of the first clock unit, and records the time indicated by the clock of the second clock unit, to obtain a first correspondence. The first correspondence includes the time indicated by the clock of the first clock unit and the corresponding time recorded by the second clock unit at a plurality of different moments.

The first controller may convert, based on a first correspondence, the time of the sensor data from first time indicated by the clock of the first clock unit to second time indicated by the clock of the second clock unit; or convert the system log time from first time indicated by the clock of the second clock unit to second time indicated by the clock of the first clock unit.

The time recording periodicity may be any periodicity. It should be understood that a shorter periodicity indicates more abundant correspondences recorded in the time synchronization log, and more accurate time obtained through conversion, but occupies larger storage space. In an example, the time recording periodicity may be 10 minutes. According to a crystal oscillator error of 100 ppm of a crystal oscillator clock, a time deviation generated within 10 minutes is 60 ms.

For example, that the first controller converts the time of the sensor data from the first time to the second time includes: The first controller determines third time T3 in the first correspondence based on the first time T1. The third time T3 is time that is in the first correspondence and that is closest to and earlier than the first time T1. Fourth time T4 is time corresponding to the third time T3 in the first correspondence. The second time T2 should satisfy a formula 4:

$$T2 = T1 - T3 + T4 \ (4).$$

For example, as shown in the following Table 1, T1 is 1625946399.000000000s, T3 that is closest to T1 and earlier than T1 in Table 1 is 1625946365.912041664s, and T4 corresponding to T3 is 1625946365.912030220s. Therefore, obtained T2 is 1625946398.999988556s.

**Table 1**

| | | |
|---|---|---|
| Record | 1625946275.906195164s | 1625946275.906183720s |
| Record | 1625946365.912041664s | 1625946365.912030220s |
| Record | 1625946455.917828083s | 1625946455.917816639s |

Optionally, conversion of the time of the sensor data or the system log time may be implemented by using a time conversion tool, for example, the foregoing method for converting the first time into the second time is implemented.

For example, at least one time synchronization log may be obtained by using the time conversion tool, to obtain the first correspondence. Further, the first controller may input T1 into the time conversion tool to obtain and output T2.

For example, after obtaining the time synchronization log, the time conversion tool searches the time synchronization log for a keyword, for example, "Record" in Table 1, and reads time recorded by two clocks corresponding to the keyword, to obtain the first correspondence.

In some embodiments, when obtaining a plurality of time synchronization logs, the time conversion tool may perform serial processing or parallel processing on the plurality of time synchronization logs, to read time recorded at each moment by two clocks in each time synchronization log. Optionally, the time synchronization log may be specifically a log file, and may be generated by different software modules or by a same software module.

In some embodiments, if the first controller fails to find T4 by using the time conversion tool, for example, in the first correspondence, there is no time that is indicated by the clock of the first clock unit and that is earlier than T1, the time conversion tool outputs T1. In some embodiments, the first controller may mark T1 with any error identifier, for example, mark T1 as red or mark T1 with a strikethrough.

In some embodiments, the first controller may convert T2 obtained through conversion from a second or a nanosecond to a date (for example, year, month, and day).

It should be noted that, in the implementation 7, only the sensor data and the system log data are used as examples for description, but it does not mean that only conversion of the time of the sensor data and the log data time can be implemented. In this embodiment, only the to-be-converted first time needs to be obtained, so that the first time indicated by the first clock unit may be converted into the second time indicated by the clock of the second clock unit.

It should be noted that, in the implementation 7, the time indicated by the clock of the second clock unit may also be converted into the time indicated by the clock of the first clock unit. The implementation is similar to that of converting the time indicated by the clock of the first clock unit into the time indicated by the clock of the second clock unit, and details are not described herein again.

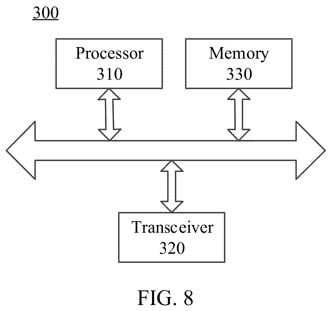

The methods provided in embodiments of this application are described above in detail with reference to FIG. 2 to FIG. 6. Apparatuses provided in embodiments of this application are described below in detail with reference to FIG. 7 and FIG. 8.

FIG. 7 is a schematic diagram of a structure of a control apparatus 200 according to an embodiment of this application. As shown in FIG. 7, the control apparatus 200 may include a processing unit 210, and in some embodiments, further includes a transceiver unit 220.

Optionally, the control apparatus 200 may be used in the first controller in the foregoing method embodiments. The control apparatus 200 may include a unit configured to perform the method performed by the first controller in any one of the foregoing method embodiments. In addition, the units in the clock synchronization apparatus 200 and the foregoing other operations and/or functions are separately used to implement corresponding procedures of the method in any one of the foregoing embodiments. For example, the clock synchronization apparatus 200 may be a terminal device, or a component (for example, a chip or a chip system) configured in the terminal device.

When the control apparatus 200 is used in the first controller, the processing unit 210 is configured to add a timestamp to sensor data by using a first clock. The first clock is a clock of a first clock unit or a clock of a third clock unit.

In some embodiments, the transceiver unit 220 is configured for the first controller to send first time T1 to a second controller in response to a trigger signal of a periodic pulse in each periodicity, where the first time T1 is time indicated by the clock of the first clock unit at a trigger moment of the trigger signal.

In some embodiments, the periodic pulse is a pulse per second.

In some embodiments, the transceiver unit 220 is further configured to receive a pulse per second sent by an INS, a clock system further includes the INS, and the INS is connected to the first controller.

In some embodiments, the transceiver unit 220 is further configured to receive second sensor data sent by the second controller. The second sensor data carries first time T1, and the first time T1 is time indicated by the clock of the third clock unit at a collection moment of the second sensor data. The processing unit 210 is specifically configured to convert the first time T1 carried in the second sensor data into second time T2. The second time T2 is time indicated by the clock of the first clock unit at the collection moment of the second sensor data. The first clock is the clock of the first clock unit.

In some embodiments, the processing unit 210 is specifically configured to obtain the second time T2 based on the first time T1, third time T3, and fourth time T4 through conversion. The third time T3 is time indicated by the clock of the first clock unit when the first controller receives the second sensor data, and the fourth time T4 is time indicated by a clock of a second clock unit when the first controller receives the sensor data.

In some embodiments, the second time T2 satisfies the following formula 2:

$$T2 = T3 - (T4 - T1) \quad (2).$$

In some embodiments, the transceiver unit 220 is further configured to receive first sensor data. The first sensor data carries first time T1, and the first time T1 is time indicated by the clock of the first clock unit at a collection moment of the first sensor data. The processing unit 210 is specifically configured to convert the first time T1 carried in the first sensor data into second time T2. The second time T2 is time indicated by the clock of the third clock unit at the collection moment of the first sensor data. The first clock is the clock of the third clock unit.

In some embodiments, the processing unit 220 is specifically configured for the first controller to determine the second time T2 based on the first time T1, third time T3, and fourth time T4. The third time T3 is time indicated by the clock of the first clock unit when the first controller receives the first sensor data, and the fourth time T4 is time indicated by the clock of the second clock unit when the first controller receives the first sensor data.

In some embodiments, the second time T2 satisfies the following formula 3:

$$T2=T4-(T3-T1)\ (3).$$

In some embodiments, the transceiver unit 220 is further configured to receive first sensor data; and the processing unit 210 is specifically configured to add a timestamp to the first sensor data based on first time. The first time is time indicated by the clock of the second clock unit when the first controller receives the first sensor data, and the first clock is the clock of the third clock unit.

In some embodiments, the processing unit 210 is specifically configured to: synchronize the clock of the first clock unit to the clock of the second clock unit based on a preset synchronization periodicity; and add a timestamp to the sensor data by using the first clock. The first clock is the clock of the third clock unit.

It should be understood that a specific process in which the units perform the foregoing corresponding steps is described in detail in the foregoing method embodiments, and for brevity, details are not described herein.

Optionally, the control apparatus 200 may be used in the second controller in the foregoing method embodiments. The control apparatus 200 may include a unit configured to perform the method performed by the second controller in any one of the foregoing method embodiments. In addition, the units in the clock synchronization apparatus 200 and the foregoing other operations and/or functions are separately used to implement corresponding procedures of the method in any one of the foregoing embodiments. For example, the clock synchronization apparatus 200 may be a terminal device, or a component (for example, a chip or a chip system) configured in the terminal device.

When the control apparatus 200 is used in the second controller, the processing unit 210 is configured to add a timestamp to sensor data by using a first clock. The first clock is a clock of a first clock unit or a clock of a third clock unit.

In a possible implementation, the processing unit 210 is specifically configured to: synchronize the clock of the third clock unit to the clock of the first clock unit; and add a timestamp to the sensor data by using the first clock. The first clock is the clock of the first clock unit.

In a possible implementation, the transceiver unit 220 is configured to receive first time sent by a first controller. The first time is time indicated by the clock of the first clock unit at a trigger moment of a trigger signal, the trigger signal is a signal of a periodic pulse in each periodicity, and the first controller includes the first clock unit. The processing unit 210 is further configured to convert, in the periodicity, time indicated by the clock of the third clock unit into second time. The second time is time indicated by the clock of the first clock unit when the second controller receives the first time, and the second controller includes the third clock unit.

In a possible implementation, the processing unit 210 is specifically configured to obtain the second time T2 based on the first time T1, third time T3, and fourth time T4 through conversion. The third time T3 is time indicated by the clock of the third clock unit at the trigger moment, and the fourth time T4 is time indicated by the clock of the third clock unit when the second controller receives the first time T1.

In a possible implementation, the second time T2 satisfies the following formula 1:

$$T2=T4-T3+T1\ (1).$$

In a possible implementation, the periodic pulse is a pulse per second.

In a possible implementation, the transceiver unit 220 is further configured to receive a pulse per second sent by an INS, a clock system includes the INS, and the INS is connected to the second controller.

In a possible implementation, the transceiver unit 220 is further configured to send second sensor data to the first controller. The second sensor data carries first time T1, and the first time T1 is time indicated by the clock of the third clock unit at a collection moment of the second sensor data. The first clock is the clock of the first clock unit.

It should be understood that a specific process in which the units perform the foregoing corresponding steps is described in detail in the foregoing method embodiments, and for brevity, details are not described herein.

When the clock synchronization apparatus 200 is a terminal device (for example, the first controller and the second controller), the transceiver unit 220 in the control apparatus 200 may be implemented by using a transceiver, for example, may correspond to a transceiver 320 in a control apparatus 300 shown in FIG. 8. The processing unit 210 in the control apparatus 200 may be implemented by using at least one processor, for example, may correspond to a processor 310 in the control apparatus 300 shown in FIG. 8.

When the clock synchronization apparatus 200 is a chip or a chip system configured in a terminal device (for example, the first controller and the second controller), the transceiver unit 220 in the clock synchronization apparatus 200 may be implemented by using an input/output interface, a circuit, or the like, and the processing unit 210 in the clock synchronization apparatus 200 may be implemented by using a processor, a microprocessor, an integrated circuit, or the like integrated in the chip or the chip system.

FIG. 8 is another schematic block diagram of a clock synchronization apparatus 300 according to an embodiment of this application. As shown in FIG. 8, the apparatus 300 may include a processor 310, a transceiver 320, and a memory 330. The processor 310, the transceiver 320, and the memory 330 communicate with each other through an internal connection path. The memory 330 is configured to store instructions. The processor 310 is configured to execute the instructions stored in the memory 330, to control the transceiver 320 to send a signal and/or receive a signal.

It should be understood that the controller 300 may correspond to the first controller or the second controller in the foregoing method embodiments, and may be configured to perform steps and/or procedures performed by the first controller or the second controller in the foregoing method embodiments. Optionally, the memory 330 may include a read-only memory and a random access memory, and provide instructions and data for the processor. A part of the memory may further include a non-volatile random access memory. The memory 330 may be a separate component, or may be integrated in the processor 310. The processor 310 may be configured to execute the instructions stored in the memory 330. When the processor 310 executes the instructions stored in the memory, the processor 310 is configured to perform the steps and/or procedures in the foregoing method embodiments corresponding to the first controller or the second controller.

Optionally, the control apparatus 300 is the first controller in the foregoing embodiment.

Optionally, the control apparatus 300 is the second controller in the foregoing embodiment.

The transceiver 320 may include a transmitter and a receiver. The transceiver 320 may further include an antenna. There may be one or more antennas. The processor 310, the memory 330, and the transceiver 320 may be devices integrated in different chips. For example, the processor 310 and the memory 330 may be integrated in a baseband chip, while the transceiver 320 may be integrated in a radio frequency chip. The processor 310, the memory 330, and the transceiver 320 may alternatively be devices integrated in a same chip. This is not limited in this application.

Optionally, the control apparatus 300 is a component, for example, a chip or a chip system, configured in the first controller.

Optionally, the control apparatus 300 is a component, for example, a chip or a chip system, configured in the second controller.

The transceiver 320 may alternatively be a communication interface, for example, an input/output interface or a circuit. The transceiver 320, the processor 310, and the memory 320 may all be integrated in a same chip, for example, integrated in a baseband chip.

This application further provides a processing apparatus, including at least one processor. The at least one processor is configured to execute a computer program stored in a memory, so that the processing apparatus performs the method performed by the first controller or the method performed by the second controller in the foregoing method embodiments.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, so that the processing apparatus performs the method performed by the first controller or the method performed by the second controller in the foregoing method embodiments.

An embodiment of this application further provides a processing apparatus, including a processor and a memory. The memory is configured to store a computer program, and the processor is configured to invoke the computer program from the memory and run the computer program, so that the processing apparatus performs the method performed by the first controller or the method performed by the second controller in the foregoing method embodiments.

It should be understood that, the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing (digital signal processing, DSP) circuit, a microcontroller (micro controller unit, MCU), a programmable controller (programmable logic device, PLD), or another integrated chip.

In an implementation process, the steps in the foregoing methods can be completed by using an integrated logical circuit of hardware in the processor, or by using instructions in a form of software. The steps of the method disclosed with reference to embodiments of this application may be directly executed and completed by a hardware processor, or may be executed and completed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be completed by using an integrated logic circuit of hardware in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component, and may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly executed and completed by a hardware decoding processor, or may be executed and completed by using a combination of hardware and software modules in a decoding processor. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through an example but not a limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memories of the systems and methods described in the text are intended to include, but are not limited to these and any other suitable types of memories.

According to the method provided in the embodiments of this application, this application further provides a computer program product. The computer program product includes computer program code. When the computer program code is run on a computer, the computer is enabled to perform the method performed by the first controller in the embodiment shown in FIG. 2, FIG. 6, or FIG. 7, or the computer is enabled to perform the method performed by the second controller in the embodiment shown in FIG. 2 or FIG. 6.

According to the method provided in embodiments of this application, this application further provides a computer-readable storage medium. The computer-readable storage medium stores program code. When the program code is run on a computer, the computer is enabled to perform the method performed by the first controller in the embodiment shown in FIG. 2, FIG. 6, or FIG. 7, or the computer is enabled to perform the method performed by the second controller in the embodiment shown in FIG. 2 or FIG. 6.

According to the method provided in embodiments of this application, this application further provides a movable terminal. The movable terminal may include two controllers, for example, the foregoing first controller and second controller. The movable terminal further includes sensors respectively connected to the two controllers. Optionally, the movable terminal may be an intelligent vehicle, an intelligent robot, or the like.

Further embodiments of the present invention are provided in the following. It should be noted that the numbering used in the following section does not necessarily need to comply with the numbering used in the previous sections.

Embodiment 1. A clock synchronization method of a control system, wherein the control system comprises a first controller and a second controller, the first controller comprises a first clock unit and a second clock unit, the second controller comprises a third clock unit, a clock of the first clock unit is different from a clock of the third clock unit, a clock of the second clock unit is the same as the clock of the third clock unit, and the method comprises:

adding, by the first controller and the second controller, a timestamp to sensor data by using a first clock, wherein the first clock is the clock of the first clock unit or the clock of the third clock unit.

Embodiment 2. The method according to embodiment 1, wherein the first clock is the clock of the first clock unit, and the adding, by the first controller and the second controller, a timestamp to sensor data by using a first clock comprises:

synchronizing, by the second controller, the clock of the third clock unit to the clock of the first clock unit; and
adding, by both the first controller and the second controller, the timestamp to the sensor data by using the first clock.

Embodiment 3. The method according to embodiment 2, wherein the synchronizing, by the second controller, the clock of the third clock unit to the clock of the first clock unit comprises:

sending, by the first controller, first time T1 to the second controller in response to a trigger signal of a periodic pulse in each periodicity, wherein the first time T1 is time indicated by the clock of the first clock unit at a trigger moment of the trigger signal; and
converting, by the second controller in the periodicity, time indicated by the clock of the third clock unit into second time T2, wherein the second time T2 is time indicated by the clock of the first clock unit when the second controller receives the first time T1.

Embodiment 4. The method according to embodiment 3, wherein the method further comprises:
obtaining, by the second controller, the second time T2 based on the first time T1, third time T3, and fourth time T4 through conversion, wherein the third time T3 is time indicated by the clock of the third clock unit at the trigger moment, and the fourth time T4 is time indicated by the clock of the third clock unit when the second controller receives the first time T1.
Embodiment 5. The method according to embodiment 4, wherein the second time T2 satisfies the following formula 1:

$$T2=T4-T3+T1 \ (1).$$

Embodiment 6. The method according to any one of embodiments 3 to 5, wherein the periodic pulse is a pulse per second.
Embodiment 7. The method according to embodiment 6, wherein the control system further comprises an inertial navigation system INS, the INS is separately connected to the first controller and the second controller, and the method further comprises:
receiving, by the first controller and/or the second controller, a pulse per second sent by the INS.
Embodiment 8. The method according to embodiment 1, wherein the first clock is the clock of the first clock unit, and the adding, by the first controller and the second controller, a timestamp to sensor data by using a first clock comprises:

sending, by the second controller, second sensor data to the first controller, wherein the second sensor data carries first time T1, and the first time T1 is time indicated by the clock of the third clock unit at a collection moment of the second sensor data; and
converting, by the first controller, the first time T1 carried in the second sensor data into second time T2, wherein the second time T2 is time indicated by the clock of the first clock unit at the collection moment of the second sensor data.

Embodiment 9. The method according to embodiment 8, wherein the converting, by the first controller, the first time T1 carried in the second sensor data into second time T2 comprises:
obtaining, by the first controller, the second time T2 based on the first time T1, third time T3, and fourth time T4 through conversion, wherein the third time T3 is time indicated by the clock of the first clock unit when the first controller receives the second sensor data, and the fourth time T4 is time indicated by the clock of the second clock unit when the first controller receives the sensor data.
Embodiment 10. The method according to embodiment 9, wherein the second time T2 satisfies the following formula 2:

$$T2=T3-(T4-T1) \ (2).$$

Embodiment 11. The method according to embodiment 1, wherein the first clock is the clock of the third clock unit, and the adding, by the first controller and the second controller, a timestamp to sensor data by using a first clock comprises:

receiving, by the first controller, first sensor data, wherein the first sensor data carries first time T1, and the first time T1 is time indicated by the clock of the first clock unit at a collection moment of the first sensor data; and

converting, by the first controller, the first time T1 carried in the first sensor data into second time T2, wherein the second time T2 is time indicated by the clock of the third clock unit at the collection moment of the first sensor data.

Embodiment 12. The method according to embodiment 11, wherein the converting, by the first controller, the first time T1 carried in the first sensor data into second time T2 comprises:
determining, by the first controller, the second time T2 based on the first time T1, third time T3, and fourth time T4, wherein the third time T3 is time indicated by the clock of the first clock unit when the first controller receives the first sensor data, and the fourth time T4 is time indicated by the clock of the second clock unit when the first controller receives the first sensor data.

Embodiment 13. The method according to embodiment 12, wherein the second time T2 satisfies the following formula 3:

$$T2=T4-(T3-T1)\ (3).$$

Embodiment 14. The method according to embodiment 1, wherein the first clock is the clock of the third clock unit, and the adding, by the first controller and the second controller, a timestamp to sensor data by using a first clock comprises:

receiving, by the first controller, first sensor data; and
adding, by the first controller, the timestamp to the first sensor data based on first time, wherein the first time is time indicated by the clock of the second clock unit when the first controller receives the first sensor data.

Embodiment 15. The method according to embodiment 1, wherein the first clock is the clock of the third clock unit, and the adding, by the first controller and the second controller, a timestamp to sensor data by using a first clock comprises:

synchronizing, by the first controller, the clock of the first clock unit to the clock of the second clock unit based on a preset synchronization periodicity; and
adding, by both the first controller and the second controller, the timestamp to the sensor data by using the first clock.

Embodiment 16. A clock synchronization method of a control system, comprising:

receiving, by a second controller, first time sent by a first controller, wherein the first time is time indicated by a clock of a first clock unit at a trigger moment of a trigger signal, the trigger signal is a signal of a periodic pulse in each periodicity, and the first controller comprises the first clock unit; and
converting, by the second controller in the periodicity, time indicated by a clock of a third clock unit into second time, wherein the second time is time indicated by the clock of the first clock unit when the second controller receives the first time, and the second controller comprises the third clock unit.

Embodiment 17. A control system, comprising a first controller and a second controller, wherein

the first controller comprises a first clock unit and a second clock unit, and the second controller comprises a third clock unit;
a clock of the first clock unit is different from a clock of the third clock unit, and a clock of the second clock unit is the same as the clock of the third clock unit;
the first controller is configured to add a timestamp to sensor data by using a first clock; and
the second controller adds a timestamp to sensor data by using the first clock, wherein
the first clock is the clock of the first clock unit or the clock of the third clock unit.

Embodiment 18. The system according to embodiment 17, wherein

the first controller is specifically configured to: synchronize the clock of the third clock unit to the clock of the first clock unit; and add the timestamp to the sensor data by using the first clock; and
the second controller is specifically configured to add the timestamp to the sensor data by using the first clock, wherein the first clock is the clock of the first clock unit.

Embodiment 19. The system according to embodiment 18, wherein

the first controller is specifically configured to: send first time T1 to the second controller in response to a trigger signal of a periodic pulse in each periodicity, wherein the first time T1 is time indicated by the clock of the first clock unit at a trigger moment of the trigger signal; and

the second controller is specifically configured to convert, in the periodicity, time indicated by the clock of the third clock unit into second time T2, wherein the second time T2 is time indicated by the clock of the first clock unit when the second controller receives the first time T1.

Embodiment 20. The system according to embodiment 19, wherein the second controller is specifically configured to:

obtain the second time T2 based on the first time T1, third time T3, and fourth time T4 through conversion, wherein the third time T3 is time indicated by the clock of the third clock unit at the trigger moment, and the fourth time T4 is time indicated by the clock of the third clock unit when the second controller receives the first time T1.

Embodiment 21. The system according to embodiment 20, wherein the second time T2 satisfies the following formula 1:

$$T2=T4-T3+T1 \ (1).$$

Embodiment 22. The system according to any one of embodiments 19 to 21, wherein the periodic pulse is a pulse per second.

Embodiment 23. The system according to embodiment 22, wherein the control system further comprises an inertial navigation system INS, and the INS is separately connected to the first controller and the second controller;

the first controller is further configured to receive a pulse per second sent by the INS; and/or

the second controller is further configured to receive a pulse per second sent by the INS.

Embodiment 24. The system according to embodiment 17, wherein

the second controller is specifically configured to send second sensor data to the first controller, wherein the second sensor data carries first time T1, and the first time T1 is time indicated by the clock of the third clock unit at a collection moment of the second sensor data; and

the first controller is specifically configured to convert the first time T1 carried in the second sensor data into second time T2, wherein the second time T2 is time indicated by the clock of the first clock unit at the collection moment of the second sensor data, and

the first clock is the clock of the first clock unit.

Embodiment 25. The system according to embodiment 24, wherein the first controller is specifically configured to:

obtain the second time T2 based on the first time T1, third time T3, and fourth time T4 through conversion, wherein the third time T3 is time indicated by the clock of the first clock unit when the first controller receives the second sensor data, and the fourth time T4 is time indicated by the clock of the second clock unit when the first controller receives the sensor data.

Embodiment 26. The system according to embodiment 25, wherein the second time T2 satisfies the following formula 2:

$$T2=T3-(T4-T1) \ (2).$$

Embodiment 27. The system according to embodiment 17, wherein the first controller is specifically configured to:

receive first sensor data, wherein the first sensor data carries first time T1, and the first time T1 is time indicated by the clock of the first clock unit at a collection moment of the first sensor data; and

convert the first time T1 carried in the first sensor data into second time T2, wherein the second time T2 is time indicated by the clock of the third clock unit at the collection moment of the first sensor data, and

the first clock is the clock of the third clock unit.

Embodiment 28. The system according to embodiment 27, wherein the first controller is specifically configured to:

determine the second time T2 based on the first time T1, third time T3, and fourth time T4, wherein the third time T3 is time indicated by the clock of the first clock unit when the first controller receives the first sensor data, and the fourth time T4 is time indicated by the clock of the second clock unit when the first controller receives the first sensor data.

Embodiment 29. The system according to embodiment 28, wherein the second time T2 satisfies the following formula 3:

$$T2 = T4 - (T3 - T1) \quad (3).$$

Embodiment 30. The system according to embodiment 17, wherein
the first controller is specifically configured to:

receive first sensor data; and
the first controller adds a timestamp to the first sensor data based on first time, wherein the first time is time indicated by the clock of the second clock unit when the first controller receives the first sensor data, and
the first clock is the clock of the third clock unit.

Embodiment 31. The system according to embodiment 17, wherein

the first controller is specifically configured to: synchronize the clock of the first clock unit to the clock of the second clock unit based on a preset synchronization periodicity; and add a timestamp to the sensor data by using the first clock; and
the second controller is specifically configured to add a timestamp to the sensor data by using the first clock, wherein the first clock is the clock of the third clock unit.

Embodiment 32. A control apparatus, comprising:

a transceiver unit, configured to receive first time sent by a first controller, wherein the first time is time indicated by a clock of a first clock unit at a trigger moment of a trigger signal, the trigger signal is a signal of a periodic pulse in each periodicity, and the first controller comprises the first clock unit; and
a processing unit, configured to convert, in the periodicity, time indicated by a clock of a third clock unit into second time, wherein the second time is time indicated by the clock of the first clock unit when a second controller receives the first time, and the second controller comprises the third clock unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A clock synchronization method of a first controller, wherein the first controller comprises a first clock unit and a second clock unit, and the method comprises:

adding, by the first controller, a timestamp to sensor data by using a first clock, wherein the first clock is the clock of the first clock unit or the clock of a third clock unit, wherein
the third clock unit is included in a second controller, a clock of the first clock unit is different from a clock of the third clock unit, a clock of the second clock unit is the same as the clock of the third clock unit, and the first clock is further used by the second controller to add a timestamp to sensor data.

2. The method according to claim 1, and the method further comprises:
sending, by the first controller, first time T1 to the second controller in response to a trigger signal of a periodic pulse in each periodicity, wherein the first time T1 is time indicated by the clock of the first clock unit at a trigger moment of the trigger signal.

3. The method according to claim 1, wherein the first clock is the clock of the first clock unit, and the adding, by the first controller, a timestamp to sensor data by using a first clock comprises:

Receiving, by the first controller, second sensor data sent by the second controller, wherein the second sensor data carries first time T1, and the first time T1 is time indicated by the clock of the third clock unit at a collection moment of the second sensor data; and
converting, by the first controller, the first time T1 carried in the second sensor data into second time T2, wherein the second time T2 is time indicated by the clock of the first clock unit at the collection moment of the second sensor data.

4. The method according to claim 3, wherein the converting, by the first controller, the first time T1 carried in the second sensor data into second time T2 comprises:
obtaining, by the first controller, the second time T2 based on the first time T1, third time T3, and fourth time T4 through conversion, wherein the third time T3 is time indicated by the clock of the first clock unit when the first controller receives the second sensor data, and the fourth time T4 is time indicated by the clock of the second clock unit when the first controller receives the sensor data.

5. The method according to claim 1, wherein the first clock is the clock of the third clock unit, and the adding, by the first controller, a timestamp to sensor data by using a first clock comprises:

receiving, by the first controller, first sensor data, wherein the first sensor data carries first time T1, and the first time T1 is time indicated by the clock of the first clock unit at a collection moment of the first sensor data; and
converting, by the first controller, the first time T1 carried in the first sensor data into second time T2, wherein the second time T2 is time indicated by the clock of the third clock unit at the collection moment of the first sensor data.

6. The method according to claim 5, wherein the converting, by the first controller, the first time T1 carried in the first sensor data into second time T2 comprises:
determining, by the first controller, the second time T2 based on the first time T1, third time T3, and fourth time T4, wherein the third time T3 is time indicated by the clock of the first clock unit when the first controller receives the first sensor data, and the fourth time T4 is time indicated by the clock of the second clock unit when the first controller receives the first sensor data.

7. The method according to claim 1, wherein the first clock is the clock of the third clock unit, and the adding, by the first controller, a timestamp to sensor data by using a first clock comprises: receiving, by the first controller, first sensor data; and
adding, by the first controller, the timestamp to the first sensor data based on first time, wherein the first time is time indicated by the clock of the second clock unit when the first controller receives the first sensor data.

8. The method according to claim 1, wherein the first clock is the clock of the third clock unit, and the adding, by the first controller, a timestamp to sensor data by using a first clock comprises:

synchronizing, by the first controller, the clock of the first clock unit to the clock of the second clock unit based on a preset synchronization periodicity; and
adding, by the first controller, the timestamp to the sensor data by using the first clock.

9. A clock synchronization method of a second controller, wherein the second controller comprises a third clock unit, and the method comprises:

adding, by the second controller, a timestamp to sensor data by using a first clock, wherein the first clock is the clock of a first clock unit or the clock of the third clock unit, wherein
the first clock unit is included in a first controller, and the first controller further comprises a second clock unit, a clock of the first clock unit is different from a clock of the third clock unit, a clock of the second clock unit is the same as the clock of the third clock unit, and the first clock is further used by the first controller to add a timestamp to sensor data.

10. The method according to claim 9, wherein the first clock is the clock of the first clock unit, and the adding, by the second controller, a timestamp to sensor data by using a first clock comprises:

synchronizing, by the second controller, the clock of the third clock unit to the clock of the first clock unit; and adding, by the second controller, the timestamp to the sensor data by using the first clock.

11. The method according to claim 10, wherein the synchronizing, by the second controller, the clock of the third clock unit to the clock of the first clock unit comprises:

receiving, by the second controller, first time sent by the first controller, wherein the first time is time indicated by the clock of the first clock unit at a trigger moment of a trigger signal, the trigger signal is a signal of a periodic pulse in each periodicity, and the first controller includes the first clock unit; and converting, by the second controller, in the periodicity, time indicated by the clock of the third clock unit into second time, wherein the second time is time indicated by the clock of the first clock unit when the second controller receives the first time, and the second controller includes the third clock unit.

12. The method according to claim 11, the method further comprises:
obtain, by the second controller, the second time T2 based on the first time T1, third time T3, and fourth time T4 through conversion, wherein the third time T3 is time indicated by the clock of the third clock unit at the trigger moment, and the fourth time T4 is time indicated by the clock of the third clock unit when the second controller receives the first time T1.

13. The method according to claim 9, and the method further comprises:
sending, by the second controller, second sensor data to the first controller, wherein the second sensor data carries first time T1, and the first time T1 is time indicated by the clock of the third clock unit at a collection moment of the second sensor data.

14. A clock synchronization apparatus, wherein the clock synchronization apparatus is configured to perform the method according to any one of claims 1 to 8, or to perform the method according to any one of claims 9 to 13.

15. A computer-readable storage medium, wherein the computer-readable storage medium stores a computer program, and when the computer program is executed by a computer, the method according to any one of claims 1 to 13 is implemented.

Clock of a first clock unit

Clock of a second clock unit

~ 100

INS 140

First controller 110

Second clock unit
112

First clock unit
111

Second controller 120

Third clock unit
121

Sensor 130

Sensor 130

FIG. 1

FIG. 2

Clock of a first clock unit

Clock of a second clock unit

INS 140

Pulse per second

First controller 110

Second controller 120

Second clock unit 112

First clock unit 111

Third clock unit 121

First time

Sensor 130

Sensor 130

FIG. 3

◌ Clock of a first clock unit

◯ Clock of a second clock unit

First controller 110

Second clock unit 112

First clock unit 111

Second controller 120

Third clock unit 121

Sensor 130

Sensor 130

FIG. 4

◌ Clock of a first clock unit

◯ Clock of a second clock unit

First controller 110

Second clock unit 112

First clock unit 111

Second sensor data

Second controller 120

Third clock unit 121

Sensor 130

Sensor 130

FIG. 5

Clock of a first clock unit

Clock of a second clock unit

| First controller 110 | | Second controller 120 |
| --- | --- | --- |

Second clock unit 112

First clock unit 111

Third clock unit 121

First sensor data

Sensor 130

Sensor 130

FIG. 6

Control apparatus 200

Processing unit 210

Transceiver unit 220

FIG. 7

300

| Processor 310 | Memory 330 |
|---|---|

Transceiver 320

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110938524